# EUROPÄISCHE PATENTSCHRIFT

(11) **EP 2 042 814 B1**
(45) Veröffentlichungstag und Bekanntmachung des Hinweises auf die Patenterteilung: **15.06.2011**
(21) Anmeldenummer: 08016841.2
(22) Anmeldetag: 25.09.2008
(51) Int. Cl.: F24F 3/16

(54) **System für die Belüftung innerhalb eines geschützen Untersuchungsfahrzeugs mit einer kontaminierte Proben aufnehmenden Räumlichkeit**
System for ventilating inside a protected test vehicle with an area for carrying contaminated probes
Système d'aération à l'intérieur d'un véhicule d'examen protégé ayant un local recevant des échantillons contaminés

(30) Priorität: 25.09.2007 DE 102007063637; 01.04.2008 DE 102008050516
(43) Veröffentlichungstag der Anmeldung: 01.04.2009
(73) Patentinhaber: Rheinmetall Landsysteme GmbH, 24107 Kiel (DE)
(72) Erfinder: Stulgies, Baldur, 34359 Reinhardshagen (DE); Tschirch-Otte, Michael, 34123 Kassel (DE)
(74) Vertreter: Dietrich, Barbara

(56) Entgegenhaltungen:
- EP-A- 0 637 728
- EP-B1- 1 319 918
- DE-A1-102005 031 719

## Beschreibung

Ein Untersuchungsfahrzeug dieser Art ist beispielsweise in der als nächster Stand der Technik angesehenenEP 1 319 918 B1 beschrieben. Hier werden die aufgenommenen Proben in einer Analysekammer, beispielsweise einer Glove-Box, durch eine Fahrzeugbesatzung aus einem geschützten Raum heraus behandelt und analysiert, Der Sicherheitsarbeitsplatz weist ein Absauggebläse zur Sicherstellung der abfallenden Druckkaskade auf.

Die Nutzung einer Druckluft-Schutzanlage sieht auch die CH 443 031 vor. Diese dient dazu, den Fahrzeugraum mit atembarer und Im Fahrzeuginnenraum einen Überdruck erzeugenden Luft zu versorgen.

Ein Ventil zur Steuerung des Luftdruckes innerhalb eines geschützten Raums, der durch Wandflächen begrenzt wird, ist der DE 60 2004 001 056 T2 (EP 1 443 284 B1) entnehmbar. Das dabei verwendete Klappenventil ist in einem Fenster eines geschützten Raumes installiert und dient dazu, übermäßigen Druck durch das Fenster aus dem schadstofffreien Bereich in die kontaminierte Umgebung abzulassen.

Eine Anlage zur Regulierung der Umgebungsluft zeichnet die DE 699 31 090 T2 (EP 0 935 102 B1) auf. Zur Bereitstellung einer durchgehenden Versorgung mit sauberer Luft mit einer gewünschten Temperatur für die Mannschaftsmitglieder eines Kampffahrzeuges wird ein PSA-System (Druckwechsel-Adsorptionssystem) verwendet. Dieses beinhaltet Filter, die mit einem Adsorptionsmittel-Material gefüllt sind, das Gase unter Druck adsorbiert und Gase desorbiert, sobald der Druck entfernt ist.

Die vorgenannten Lösungen gehen somit von der Einbindung zusätzlicher Komponenten aus. Sie befinden sich im stationären Betrieb. Der Platzbedarf, der Energieaufwand sowie Gewichtsprobleme erweisen sich als unflexibel.

Die Erfindung stellt sich die Aufgabe, einen sicheren Betrieb eines insbesondere mobilen Untersuchungsfahrzeugs mit Sicherheitsarbeitsplatz bzw. -plätzen in Bezug auf die Belüftung das Personenaufenthaltsraumes unter Schutzluftbedingungen mit einfachen Mitteln zu gewährleisten.

Gelöst wird die Aufgabe durch die Merkmale des Patentanspruchs 1. Vorteilhafte Ausgestaltungen sind In den Unteransprüchen aufgezelgt.

Der Erfindung liegt die Idee zugrunde, den sicheren Betrieb mittels eines selbstständigen Aufbaus einer Druckkaskade zwischen einem Fahrzeuginnenraum, den Arbeitsplätzen und der Umgebung zu realisieren, wobei nicht jeder Arbeitsraum durch ein eigenes Stützgebläse abgesaugt wird. Auf eine Abluftförderung als zusätzliche Einrichtung wird verzichtet.

Der Aufbau der Druckkaskade erfolgt vorzugsweise durch Nutzung einer fahrzeug- oder objekteigenen ABC-Schutzanlage. Speziell genutzt werden dazu der Überdruckaufbau und der fördernde Volumenstrom der ABC- Schutzanlage des Fahrzeuges (Objektes, Labors etc.), wobei mit abfallendem Überdruck zur Außenluft vom Mannschaftsraum oder Innenraum über eine, kontaminierte Proben aufnehmende Räumlichkeit, wie beispielsweise einer Glove-Box (siehe auch http://www.gloveboxes.com ) bzw. Isolator zur Umgebung die Kaskade aufgebaut wird.

Das Einstellen der Druckdifferenzen kann durch Einsatz von Überdruckventilen mit vor oder nach geschalteten Filterelementen (Schwebstofffilter) erfolgen, um so ein Eindringen kontaminierter Luft zu vermeiden. Diese Filterelemente werden vorzugsweise differenzdrucküberwacht.

Das Prinzip der Druckkaskade besteht darin, dass ein innerer Überdruck zur Umgebung die/den Bediener im Fahrzeug oder dergleichen vor dem Eindringen von Kontamination schützt. Dieses Prinzip des selbstständigen Aufbaus der Druckkaskade kann auf Untersuchungsfahrzeuge, worunter hier auch mobile Labore etc. verstanden werden, mit oder ohne eine Personenschleuse angewendet werden.

Durch das Wirkprinzip der Überdruckventile der Zu- und Abluft der Glove-Box entsteht innerhaib dieser ein Druckgradient relativ zum Mannschaftsraum. Die Drudkdifferenz von der Box zur Außenluft besteht durch den Überdruck in der Box und dem Umgebungsdruck. Die Luft, welche die Box durchströmt, wird bei Eintritt und Austritt gefiltert, um die Probenanalysen nicht durch unangepasste Luftqualität zu verfälschen, sowie die Umgebung vor Kontamination zu schützen. Vor dem Einschleusen der Proben besteht die Möglichkeit der Dekontamination des Innenraumes der Box, um ein Entweichen von Schadstoffen für die Umgebung wegen fehlender Abluftfiltrierung im Schleusenbetrieb zu vermelden.

Es wird somit ein Arbeksplatzbelüftungskonzept ohne eigene Abluftförderung vorgeschlagen, bei welchem der Vorteil insbesondere in der Nutzung von vorhandenen fahrzeugspezifischen Komponenten liegt. Es wird eine Druckkaskade zwischen einem Innenraum zur Aufnahme einer Besatzung etc., einer, die kontaminierten Proben aufnehmenden Räumlichkeit sowie einer Umgebung aufgebaut, dadurch, dass ein Zuluftgebläse im Innenraum einen inneren Überdruck zur Umgebung schafft und in der Räumlichkeit gegenüber dem Innenraum ein Unterdruck vorhanden ist bzw. geschaffen wird, wozu zwischen dem Innenraum und der Räumlichkeit sowie zwischen der Räumlichkeit Überdruckventile und Filter eingebunden, so dass über diese zumindest Im Arbeitsbetrieb die Zu- und Abluft Innerhalb der Räumlichkeit reguliert werden. Mit einem derartigen Konzept wird mit geringer Abluftmenge viel Schutz erreicht. Die Druckstufung dient zudem zur Spülung der Departements.

Selbiges Konzept kann auch als Schutzbelüftung für mobile Labore mit zwei (oder mehreren) lufttechnisch getrennten Sicherheitsarbeitsplätzen (Laminar-Flow-Feld/Glove Box) eingesetzt werden.

Die Druckkaskade wird in einer ersten Ausführung ohne Personenschleuse Im so genannten Schutzprinzip - dem Arbeitsbetrieb und dem Transferbetrieb - betrieben. Der Überdruck wird im Einschleus- als auch Arbeitsbetrieb durch ein ABC-Schutzluftgebläse aufrecht gehalten.

Im Einschleusbetrieb herrscht stets ein Unterdruck der Räumlichkeit / Glove-Box gegen den Innenraum des Fahrzeuges etc. bei andauemder Durchströmung. Die Luft entweicht aus dem Mannachafts- bzw, innenraum über ein Überdruckventil und einem Zuluftfilter In die Glove-Box und danach durch das Fahrzeugheck und die Schleusentür nach außen. Weiterhin kann Luft während der Einschleusung von Proben über ein fahrzeugeigenes Überdruckventil in die Umgebung entweichen, wenn die durch die ABC-Schutzanlage geförderte Luft nicht komplett über die Glove-Box an die Umgebung abgegeben wird.

Befindet sich das System hingegen nicht im Einschleusenbetrieb sondern im Arbeitsbetrieb, besteht eine Druckkaskade vom Mannschaftsraum über die Glove-Box nach außen. In diesem Betriebszustand ist die Schleusentür geschlossen. Im Arbeitsbetrieb wird die Druckkaskade durch ein weiteres Überdruckventil aufrechterhalten, durch welches die Luft druckverlustbehaftet von der Glove-Box an die Umgebung mit vorgeschaltetem Filter abgegeben wird.

Die Positionierung der Zuluftöffnung in die Glove-Box und der Abluftöffnung aus der Glove-Box ist so gewählt, dass eine diagonale Durchströmung der Glove-Box gewährleistet wird.

Unter ABC-Schutzbedingungen wird in einer weiteren Variante ein sicherer Betrieb mit der Möglichkeit der Probeentnahmen vor Ort durch Personen gewährleistet, wenn eine Mehrweg-Personenschleuse vorhanden ist. Der Materialtransfer von der Fahrzeugumgebung in die Sicherheitsarbeitsplätze erfolgt hierbei über eine Materialschleuse, aus welcher die Proben in den jeweiligen Arbeitsplatz eingebracht werden können. Dies erfolgt gleichfalls unter einer Druckkaskade und mittels gerichteten Luftströmungen. Der sichere Betrieb wird somit auch durch gezielte Luftströmungen aufgrund des Überdruckaufbaus durch die nach geschalteten Räumen erreicht.

Im Schleusenbetrieb ist vorgesehen, dass sich die Schleuse vorzugsweise automatisch aufbaut. Die Struktur wird vom Inneren des Objektes mit Druckluft befüllt und kann sich dadurch selbstständig entfalten. Die Schleuse wird durch eine aufblasbare Schleusenkammer gebildet, die zumindest aus einem Bodensegment, Seitenteilen und einem Dach sowie einer Außentür in einer bevorzugten Ausführung besteht. Zur Bildung einer festeren Struktur bzw. Schleuse sind entfaltbare Stützen als Tragestruktur vorgesehen, an den die Schleusenkammer angebracht bzw. angehängt ist. Die Stützen können mittels Luft, Wasser etc. befüllt werden, wobei Luft bevorzugt wird.

Die Schleuse wird mit definiertem Luftdurchlass aus dem Objekt oder Fahrzeug heraus mit gefilterter Luft aus der ABC-Schutzbelüftungsanlage versorgt und entfaltet sich. Das Belüftungssystem erzeugt eine abgestufte Belüftungskaskade vom Objekt / Fahrzeug über das Schleuseneingangssystem bis zur Umgebung hin. Die aus einem Überdruckventil des Objektes / Fahrzeuges abströmende Luft wird in das Schleusenzeit bzw. die Schleusenkammer geleitet. Dabei werden alle Türen und Öffnungen geschlossen gehalten, bis der erforderliche Druck aufgebaut ist. Um den Volumenstrom der ABC-Schutzbelüftungsanlage zum Spülen des Schleusenzeites innerhalb kürzester Zeit nutzen zu können, wird bei Personentransfer das Glove-Box-Verbundsystem vorzugsweise in einen Save-Mode gefahren. Das mit ABC-gefilterter Luft gefüllte Schleuseneingangssystem ist zum Ausschleusen bereit. Die Druckkaskaden bzw. das Druckgefälle zwischen Objekt, Schleuse und Außen ermöglicht so die Schleusung von Material sowie Personen.

Nach Beendigung des Schleusenbetriebs, wenn sich der Bediener wieder im Inneren des Objektes befindet, kann die Schleuse zusammengefaltet werden. Das Falten kann mit bekannten mechanischen Mitteln, beispielsweise schleusenseitig angebrachte Gummizüge, passiv erfolgen. Bevorzugt wird jedoch eine einfache aktive Variante. Dabei kann das Nachströmen der Luft durch ein bevorzugt objekteigenes Überdruckventil gestoppt und sowohl die Tragestruktur als auch der Innenraum der Schleuse aktiv entlüftet werden.

Bei allen Varianten werden durch den einstellbaren Überdruck im Fahrzeugraum die Bediener im Fahrzeug zur Umgebung vor dem Eindringen von Kontamination geschützt, der Überdruck im Fahrzeug durch eine ABC-Schutzanlage aufrechterhalten. Die Luft aus dem Fahrzeuginnenraum bzw. dem Mannschaftsraum entweicht jeweils über wenigstens ein Überdruckventil, beispielsweise im Dach, bei Normalbetrieb. Bei Betrieb mit der Personenschleuse wird insbesondere das Ventil im Heckbereich aktiv.

Anhand eines Ausführungsbeispiels mit Zeichnung soll die Erfindung näher erläutert werden.

Es zeigt:
- Fig. 1: ein Belüftungskonzept im Normalbetrieb;
- Fig. 2: ein Belüftungskonzept im Transferbetrieb;
- Fig. 3: ein weiteres Belüftungekonzept für ein Labor mit wenigstens zwei getrennten Sicherheitsarbeltsplätzen;
- Fig. 4: ein Belüftungskonzept für ein Labor mit Personenschleuse;
- Fig. 5: eine Umsetzung des Konzeptes aus Fig. 4.

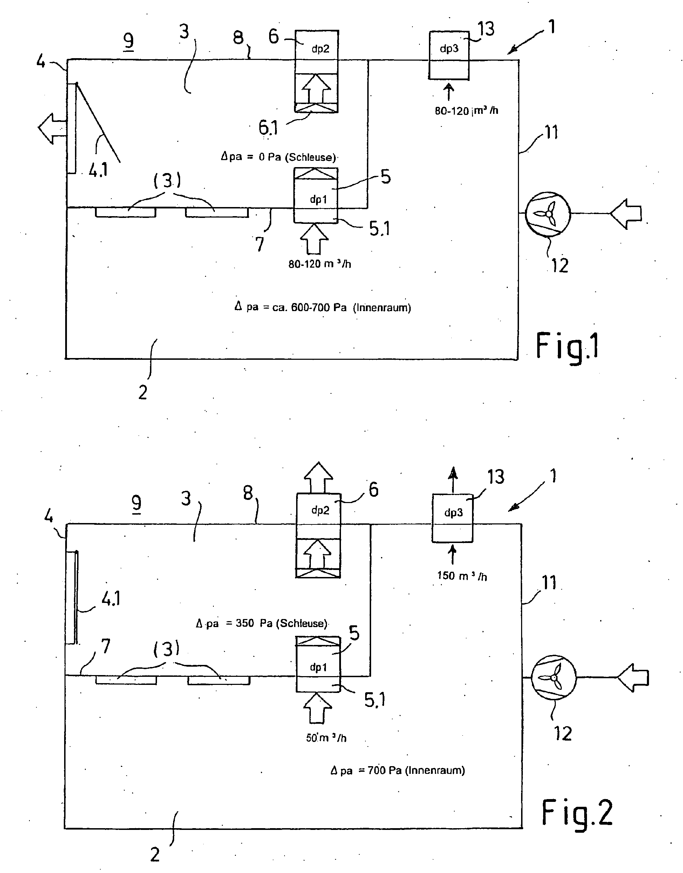

Fig. 1 sowie Fig. 2 zeigen ein beispielsweise mobiles Labor 1 oder dergleichen Untersuchungseinrichtung (stilisiert) mit einem Mannschaft- bzw. Fahrzeuginnenraum 2 für eine nicht näher dargestellte Mannschaft, einer vom Mannschaftsraum 2 getrennten Analysekammer 3 (eine Art Glove-Box), die Ihrerseits über ein Fahrzeugheck 4 mit Schleusentür 4.1 Proben eingeschleust bekommt. Der Fahrzeuginnenraum 2 ist ABC-dicht von der Kammer 3 abgeschottet.

Mit 5 bzw. 6 sind so genannte Überdruckventile gekennzeichnet, die Zuluft- oder Schwebstofffilter 5.1, 6.1 (Filterklasse nach DIN - HEPA- Filter, mit vorzugsweise v = 80 - 120 m³/h) vor bzw, nachgeschaltet und Bestandteil einer Druckkaskade 10 sind und in einer Wand 7 zwischen dem Fahrzeuginnenraum 2 und der Box 3 bzw. in einer Wand 8 zwischen der Box 3 und der Umgebung 9 eingebunden sind. Die Überdruckventile 5, 6 sind dabei differenzdrucküberwacht.

In der Wand 11 zwischen dem Fahrzeuginnenraum 2 und der Umgebung 9 ist ein Zuluftgebläse 12 (mit vorzugsweise v = 200 m³/h) sowie ein weiteres Überdruckventil 13 integriert. Das Zuluftgebläse 12 kann dabei Bestandteil einer nicht näher dargestellten, vorzugsweise fahrzeugeigenen ABC-Schutzanlage mit Schwebstoff- und Gasfilter sein.

Das Belüftungskonzept sieht dabei wie folgt aus;

Im Fahrzeuginnenraum 2 wird ein innerer Überdruck von ca. 700 Pa zur Umgebung 9 geschaffen, wodurch die Besatzung beispielsweise vor Eindringen von Kontamination geschützt wird. Dieser Überdruck wird durch das Zuluftgebläse 12 aufrechterhalten. Gleichzeitig herrscht gegenüber dem Fahrzeuginnenraum 2 stets ein Unterdruck von ca. 360 Pa in der Glove-Box 3 bei andauernder Durchströmung.

### I. Normal- bzw. Arbeitsbetrieb

Befindet sich das System Im Arbeitsbetrieb, besteht eine Druckkaskade 10 vom Fahrzeuginnenraum 2 (beispielsweise 750 Pa) über die Box 3 (beispielsweise 350 Pa) nach außen (= 0 Pa). Den Überdruck von 700 Pa zur Umgebung 9 erzeugt auch hierbei das Zuluftgebläse 12, die Schleusentür 4.1 ist geschlossen. Die Druckkaskade 10 wird in diesem Fall durch das Überdruckventile 5 und das weitere Überdruckventil 6 aufrechterhalten, durch welches letztlich die Luft druckverlustbehaftet von der Box 3 an die Umgebung 9 mit vorgeschaltetem Filter 6.1 abgegeben wird. Die Positionierung der Zuluftöffnung (5) in die Box und die Abluftöffnung (6) von der Box 3 ist vorzugsweise so gewählt, dass eine diagonale Durchströmung der Box 3 gewährleistet ist.

### II. Transferbetrieb / Einschleusung der Proben

Die Luft entweicht hierbei aus dem Fahrzeuginnenraum 2 über das Überdruckventil 5 bzw. über den Zuluftfilter 5.1 als Druckverlustkomponente im Falle der Einschleusung von Proben (nicht dargestellt) in die Box 3 und von dort durch das Fahrzeugheck 4 und die Schleusentür 4.1 nach außen. Weiterhin kann die Luft in der Praxis während der Einschleusung von Proben über das fahrzeugeigene Überdruckventil 13 in die Umgebung 9 entweichen, wenn die durch das Zuluftgebläse 12 geförderte Luft nicht komplett über die Box 3 an die Umgebung 9 abgegeben wird. Der Differenzdruck im Fahrzeuginnenraum 2 fällt von 700 Pa auf minimal 600 Pa, der in der Box von 600 Pa auf 0 Pa.

Durch dieses Wirkprinzip der Überdruckventile 5, 6 der Zu- und Abluft der Box 3 entsteht innerhalb der Box 3 ein Druckgradient relativ zum Fahrzeuginnenraum 2 von ca. 350 Pa. Die Druckdifferenz von der Box zur Außenluft (Umgebung 9) besteht durch den Überdruck in der Box 3 und dem Umgebungsdruck.

Die Luft, weiche die Box 3 durchströmt, kann bei Eintritt und Austritt vorzugsweise gefiltert werden, um die Probenanalyse nicht durch unangepasste Luftqualität zu verfälschen.

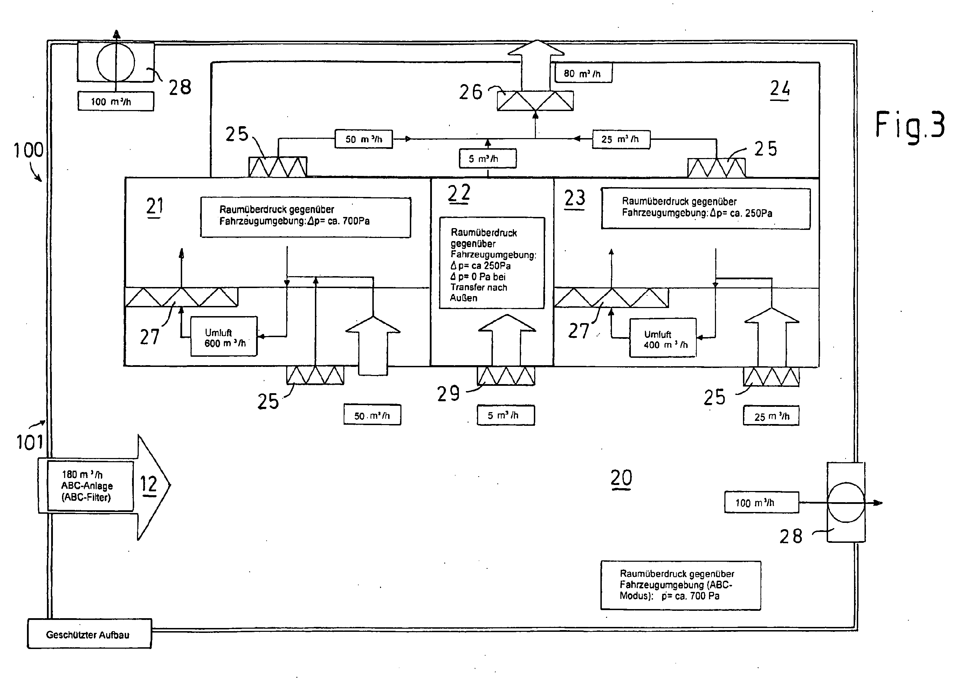

Fig. 3 zeigt ein Belüftungskonzept für ein Labor- bzw. Fahrzeuginnenraum 20 mit beispielsweise zwei getrennten Sicherheitsarbeitsplätzen 21, 23. Zwischen beiden befindet sich eine Material- Transfer- Schleuse 22, in welche die zu untersuchenden Proben (nicht näher dargestellt) von außen eingebracht werden können. Der Sicherheitsarbeitsplatz 21 ist hierbei beispielsweise ein Laminar- Flow - Feld (LLF), in der Regel ein offener Arbeitsplatz, kann aber auch wie der zweite Sicherheitsarbeitsplatz 23 eine Glove Box sein. Zwischen dem Fahrzeuginnenraum 20 und den Arbeitsplätzen 21, 23 sowie den Arbeitsplätzen 21, 23 und der Umgebung sind Filter 25, beispielsweise HEPA- Filter, sowie wenigstens ein Gasfilter 26 oder auch ein HEPA- Filter in den Wänden platziert. Die beiden Filter 25 zwischen den Arbeitsplätzen und der Umwelt sind in der Wand einem so genannten Glove- Box - Technikraum 24. Ein weiterer Filter 27, gleichfalls ein HEPA- Filter, ist in der Glove- Box 23 eingebunden für das Filtern beim Spülen der Glove- Box 23. Der Technikraum 24 besitzt zur Umgebung hin ein dem Filter 26 nachgeschaltetes Absauggebläse (nicht weiter dargestellt). Mit 28 sind zwei Überdruckfilter in der Außenwand des Fahrzeugs eingebunden, mit 29 ein weiterer Filter (HEPA- Filter) zwischen dem Fahrzeuginnenraum 20 und der Schleuse 22.

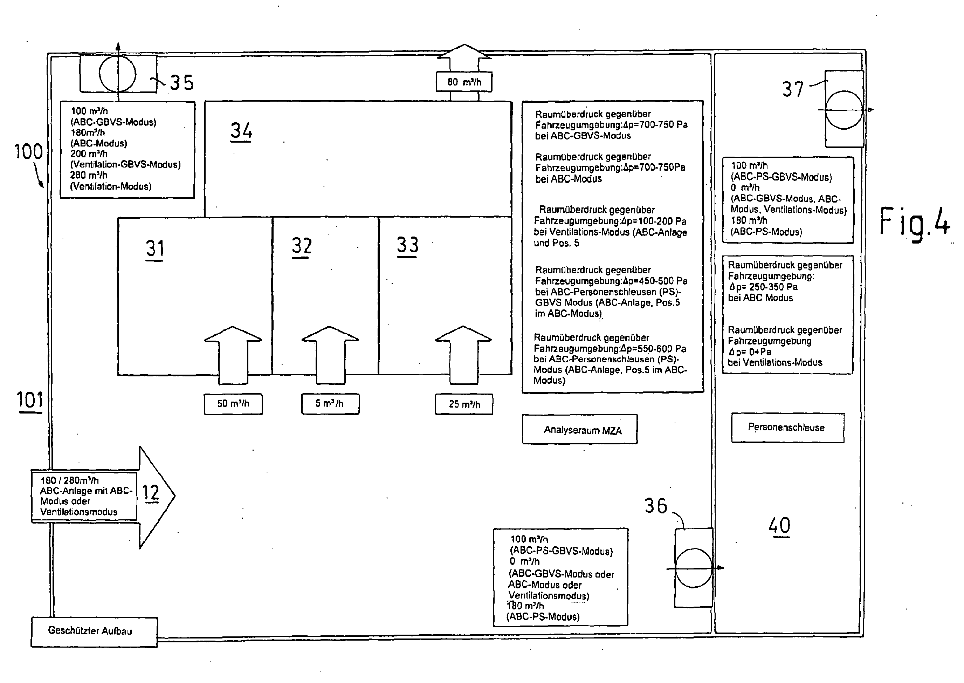

Eine in Fig. 4 aufgezeigte Variante bezieht eine Personenschleuse 40 mit ein. Die mit 31, 32 und 33 gekennzeichneten Arbeitsplätze sind auch hier beispielsweise ein LLF, eine Materialschleuse sowie eine Glove-Box. Der Innere Aufbau (Anordnung der Filter) ist identisch mit dem aus Fig. 3. Auch diese Plätze sind mit einem so genannten Glove-Box-Technikraum 34, in dem sich das Absauggebläse befindet, belüftungstechnisch verbunden. Ein Überdruckventil 35 ist beispielsweise im Dach des Analyseraumes bzw. Fahrzeuginnenraum 30 eingebunden, ein Überdruckventil 36 in der Hecktür des Analyseraumes 30. In der Personenschleuse 40 ist zusätzlich eine Rückschlegklappe 37 integriert.

In dieser Variante erfolgt zudem eine Regulierung der Luftmenge im System bei Beachtung des Arbeitsmodus. Wird das System im so genannten ABC-GBVS (Gloveboxverbundsystem) -Modus betrieben, ist weniger Zuluft aus dem System zu transportieren, im vorliegenden Modus werden beispielsweise nur 100 m³ /h aus dem System an die Umgebung 101 abgegeben. Im normalen ABC-Modus sind es 180 m³/ h, bei Ventilation im GBVS-Modus beispielsweise 200m³/h und bei einfacher Ventilation 280 m³/h.

Wird eine Personenschleuse (PS) eingebunden, kann die Luftregulierung unter Beachtung der Personenschleuse erfolgen. Beim ABC-GBVS-Modus werden 100 m³/h aus dem System ausgebracht, beim ABC-PS-Modus 180m/ h, bei den anderen 0.

Beide Belüftungskonzepte basieren auch auf dem Aufbau einer Druckkaskade 100 zwischen dem Analyseraum 20, 30 sowie den Boxen bzw. Arbeitsplätzen mit der Umgebung 101, die in der Regel verseucht ist. Die Boxen bzw. Arbeitsplätze sind dazu vorzugsweise mit der Außenwand des Labors oder Fahrzeuges etc. belüftungstechnisch verknüpft. Absauggebläse im Technikraum 24, 34 dienen dazu, einen Unterdruck einzustellen als Schutz gegen den Fahrzeuginnenraum 20, 30, um so Rückströmungen zu verhindern.

Bei einem Systemausfall, wodurch die Druckkaskade abfallen würde, da ein Überdruck nicht gewährleistet wird, dient das Absauggebläse dazu, eine Druckdifferenz zwischen den Arbeitsplätzen und dem Fahrzeuginnenraum aufrecht zu erhalten. Dazu wird das Drucksystem bzw. der Luftstrom gemessen.

Um Kreuzkontaminationen insbesondere innerhalb der Glove-Box 23, 33 zu vermeiden, wird die Luftzirkulation in der Glove-Box derart vorgenommen, dass bei Umluft vom Arbeitstisch (nicht näher dargestellt) weg nach unten über einen Luftkanal nach oben geführt wird.

Es versteht sich, dass dieses Prinzip nicht nur bei mobilen Laboren oder dergleichen Anwendung findet. Vielmehr kann dieses Prinzip auch bei stationären Objekten verwendet werden.

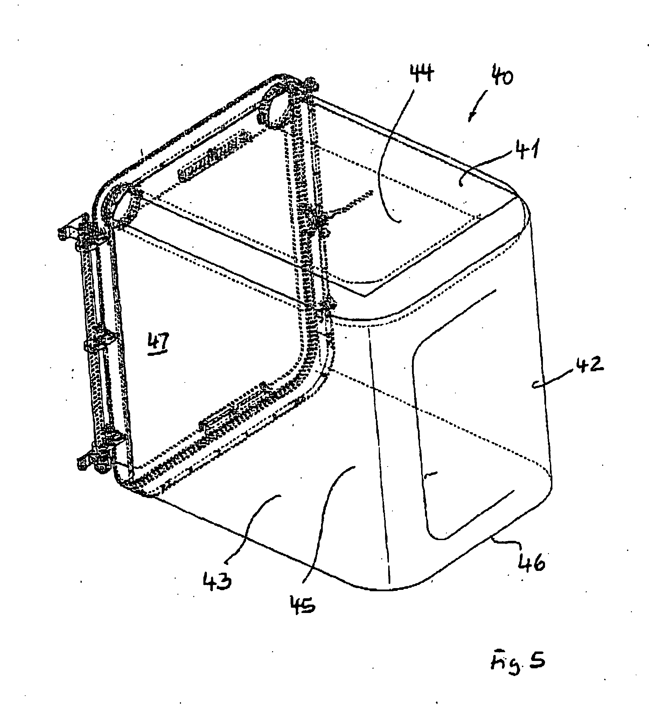

Fig. 5 zeigt eine praktische Umsetzungsvariante des Konzeptes aus Fig. 4. Diese zeigt eine zusammenfaltbare Schleuse 40. Die Schleuse 40 besteht aus aufblasbaren Druckluftstützen 41 als Tragestruktur der Schleuse 40, Seltenwänden 42, einem Bodensegment 43 und einem Dach 44, die eine Schleusenkammer 45 bilden. Eine der Seitenwände 42 besitzt eine luftdicht verschließbare Außentür 46, eine weitere bevorzugt ein Fenster. Die Stützen 41 sind mit einem Gebläse (nicht näher dargestellt) oder einem anderen, die Stützen 3 zum Entfalten bringenden Aggregat funktional verbunden.

Die Schleuse 40 kann an einem zu ebener Erde liegenden Ausgang / Zugang etc. angebracht werden, beispielsweise an einen Container (nicht näher dargestellt) mit einer darin integrierten Zugangstür 47. Die Stützen 41 sind beispielsweise mit Luft befüllt worden und haben sich dadurch in die Funktionsstellung gebracht. Die Seitenwände 42 der Schleuse 40 wurden aus dem eingefalteten Zustand in eine entfaltete Position geführt.

## Patentansprüche

1. System für die Belüftung innerhalb eines geschützten Untersuchungsfahrzeugs (1) oder dergleichen mit wenigstens einer, kontaminierte Proben aufnehmenden Räumlichkeit (3) sowie einem von dieser Räumlichkeit (3) abgeschotteten Innenraum (2) zur sicheren Aufnahme einer Besatzung, **dadurch gekennzeichnet, dass** eine Druckkaskade (10) zwischen dem Innenraum (2), der Räumlichkeit (3) und einer Umgebung (9) aufgebaut wird, durch
- ein Zuluftgebläse (12), welches im Innenraum (2) einen Innerer Überdruck zur Umgebung (9) schafft, wobei
- in der Räumlichkeit (3) gegenüber dem Innenraum (2) ein Unterdruck vorhanden ist, und
- Überdruckventile (5, 6) und Filter (5.1, 6.1), die zwischen dem Innenraum (2) und der Räumlichkeit (3) sowie zwischen der Räumlichkeit (3) und der Umgebung (9) eingebunden sind.

2. System nach Anspruch 1, **dadurch gekennzeichnet, dass** im Einschleusbetrieb die Luft aus dem Innenraum (2) über das Überdruckventil (5) In die Raumlichkeit (3) und von dort durch das Fahrzeugheck (4) und die Schleusentor (4.1) nach außen gelangt.

3. System nach Anspruch 1 oder 2, **dadurch gekennzeichnet, dass** Luft während der Einschleusung von Proben über ein fahrzeugeigenes Überdruckventil (13), welches zwischen Innenraum (2) und Umgebung (9) platziert ist, In die Umgebung (9) entweichen kann, wenn die durch das Zuluftgebläse (12) geförderte Luft nicht komplett über die Räumlichkeit (3) an die Umgebung (9) abgegeben wird.

4. System nach einem der Ansprüche 1 bis 3, **dadurch gekennzeichnet, dass** die Positionierung der Zuluftöffnung (Überdruckventil 5) In die Räumlichkeit (3) und die Abluftöffnung (Überdruckventil 6) von der Räumlichkeit (3) so gewählt ist, dass eine diagonale Durchströmung der Räumlichkeit (3) gewährleistet ist.

5. System nach einem der Ansprüche 1 bis 4, **dadurch gekennzeichnet, dass** die Luft, welche die Räumlichkeit (3) durchströmt, bei Eintritt und Austritt gefiltert wird.

6. System nach einem der Ansprüche 1 bis 5, **dadurch gekennzeichnet, dass** vor dem Einschleusen der Proben die Möglichkeit der Dekontamination des Innenraumee der Räumlichkeit (3) besteht.

7. System nach einem der Ansprüche 1 bis 6, **dadurch gekennzeichnet, dass** eine entfaltbare Schleuse (40) mit definiertem Luftdurchlass aus dem Objekt oder Fahrzeug (20) heraus mit gefilterter Luft aus der ABC-Schutzbelüftungsanlage versorgt wird.

8. System nach Anspruch 6 oder 7, **dadurch gekennzeichnet, dass** eine abgestufte Belüftungskaskade vom Objekt / Fahrzeug (20) über das Schleuseneingangssystem bis zur Umgebung hin geschaffen wird.

## Claims

1. System for ventilating inside a protected test vehicle (1) or the like, having at least one area (3) for accommodating contaminated samples, and an interior space (2) which is partitioned off from this area (3) and has the purpose of safely accommodating a crew, **characterized in that** a pressure cascade (10) is built up between the interior space (2), the area (3) and a surrounding area (9) by means of
- an inflow blower (12) which produces an internal overpressure in the interior space (2) with respect to the surrounding area (9), wherein
- an underpressure is present in the area (3) with respect to the interior space (2),
and
- overpressure valves (5, 6) and filters (5.1, 6.1), which are installed between the interior space (2) and the area (3), as well as between the area (3) and the surroundings (9).

2. System according to Claim 1, **characterized in that** in the feed-in mode the air passes from the interior space (2) via the overpressure valve (5) into the area (3) and from there to the outside through the rear part (4) of the vehicle and the airlock door (4.1).

3. System according to Claim 1 or 2, **characterized in that** during the feeding in of samples via a vehicle-specific overpressure valve (13), which is located between the interior space (2) and the surrounding area (9), air can escape into the surrounding area (9) if the air conveyed by the inflow blower (12) is not completely output into the surrounding area (9) via the area (3).

4. System according to one of Claims 1 to 3, **characterized in that** the positioning of the inflow opening (overpressure valve 5) in the area (3) and of the outflow opening (overpressure valve 6) of the area (3) are selected in such a way that a diagonal flow through the area (3) is ensured.

5. System according to one of Claims 1 to 4, **characterized in that** the air which flows through the area (3) is filtered when it enters and exits.

6. System according to one of Claims 1 to 5, **characterized in that** there is the possibility of decontaminating the inner space of the area (3) before the samples are fed in.

7. System according to one of Claims 1 to 6, **characterized in that** an unfoldable airlock (40) with a defined air passage from the object or vehicle (20) with filtered air from the ABC protective ventilation system is supplied.

8. System according to Claim 6 or 7, **characterized in that** a stepped ventilation cascade is produced from the object/vehicle (20) via the airlock input system as far as the surroundings.

## Revendications

1. Système d'aération à l'intérieur d'un véhicule d'examen protégé (1) ou analogue avec au moins un local (3) recevant des échantillons contaminés, ainsi qu'avec un espace intérieur (2) séparé de ce local (3) pour la réception sûre de personnel, **caractérisé en ce qu'**une cascade de pression (10) est établie entre l'espace intérieur (2), le local (3) et un environnement (9), par
- une soufflante d'air entrant (12), qui crée dans l'espace intérieur (2) une surpression intérieure par rapport à l'environnement (9), dans lequel
- il règne dans le local (3) une dépression par rapport à l'espace intérieur (2), et
- des soupapes de surpression (5, 6) et des filtres (5.1, 6.1), qui sont intégrés entre l'espace intérieur (2) et le local (3) ainsi qu'entre le local (3) et l'environnement (9).

2. Système selon la revendication 1, **caractérisé en ce que**, pendant le fonctionnement du sas d'entrée, l'air provenant de l'espace intérieur (2) arrive dans le local (3) à travers la soupape de surpression (5) et s'échappe de là vers l'extérieur à travers la lunette arrière du véhicule (4) et la porte du sas (4.1).

3. Système selon la revendication 1 ou 2, **caractérisé en ce que** de l'air peut s'échapper vers l'environnement (9) pendant l'introduction d'échantillons par le sas, à travers une soupape de surpression (13) du véhicule, qui est placée entre l'espace intérieur (2) et l'environnement (9), lorsque l'air envoyé par la soufflante d'air entrant (12) n'est pas complètement évacué vers l'environnement (9) via le local (3).

4. Système selon l'une quelconque des revendications 1 à 3, **caractérisé en ce que** le positionnement de l'ouverture d'air entrant (soupape de surpression 5) dans le local (3) et de l'ouverture d'air sortant (soupape de surpression 6) hors du local (3) sont choisis de façon à garantir un écoulement diagonal à travers le local (3).

5. Système selon l'une quelconque des revendications 1 à 4, **caractérisé en ce que** l'air, qui traverse le local (3), est filtré à l'entrée et à la sortie.

6. Système selon l'une quelconque des revendications 1 à 5, **caractérisé en ce que** la possibilité existe de décontaminer l'espace intérieur du local (3) avant l'introduction des échantillons.

7. Système selon l'une quelconque des revendications 1 à 6, **caractérisé en ce qu'**un sas dépliable (40) avec un débit d'air défini hors de l'objet ou du véhicule (20) est alimenté en air filtré à partir de l'installation d'aération avec protection ABC.

8. Système selon la revendication 6 ou 7, **caractérisé en ce qu'**une cascade d'aération étagée est créée depuis l'objet/véhicule (20) jusqu'à l'environnement via le système d'introduction par sas.
